Europäisches Patentamt

European Patent Office

Office européen des brevets

(11) Numéro de publication: **0 446 974 A1**

(12) # DEMANDE DE BREVET EUROPEEN

(21) Numéro de dépôt: 91200248.2

(22) Date de dépôt: 06.02.91

(51) Int. Cl.⁵: **G06F 15/80**

Le titre de l'invention a été modifié (Directives relatives à l'examen pratiqué à l'OEB, A-III, 7.3)

(30) Priorité: 09.02.90 FR 9001528

(43) Date de publication de la demande:
18.09.91 Bulletin 91/38

(84) Etats contractants désignés:
DE FR GB

(71) Demandeur: **LABORATOIRES D'ELECTRONIQUE PHILIPS**
**22, Avenue Descartes**
**F-94450 Limeil-Brévannes(FR)**
(84) **FR**

Demandeur: **N.V. Philips'**
**Gloeilampenfabrieken**
**Groenewoudseweg 1**
**NL-5621 BA Eindhoven(NL)**
(84) **DE GB**

(72) Inventeur: **Sirat, Jacques-Ariel**
**Société Civile S.P.I.D., 156, Boulevard**
**Haussmann**
**F-75008 Paris(FR)**
Inventeur: **Nadal, Jean-Pierre**
**Société Civile S.P.I.D., 156, Boulevard**
**Haussmann**
**F-75008 Paris(FR)**

(74) Mandataire: **Landousy, Christian et al**
**Société Civile S.P.I.D. 156, Boulevard**
**Haussmann**
**F-75008 Paris(FR)**

(54) **Procédé de classification mis en oeuvre dans un réseau de neurones en couches pour classification multiclasses.**

(57) Procédé de classification mis en oeuvre dans un réseau de neurones en couches, comprenant des étapes d'apprentissage au cours desquelles au moins une couche est construite par addition de neurones successifs nécessaires pour opérer par dichotomies successives une classification d'exemples répartis par classes. Pour créer au moins une couche à partir d'un groupe d'exemples répartis sur plus de deux classes, chaque neurone successif tend à distinguer ses données d'entrée selon deux sous-groupes de classes prédéterminés propres audit neurone selon une analyse en composantes principales de la distribution desdites données d'entrée soumises à l'apprentissage du neurone de la couche concernée.

EP 0 446 974 A1

M

$M^1_+$     $M^1_-$     ← N1 ← N2

$M^2_+$   $M^2_-$   $M^3_+$   $M^3_-$

N3 →   $M^4_+$ $M^4_-$   ← N3   ← N4 →   $M^5_+$ $M^5_-$

$M^6_+$     $M^6_-$     $M^7_+$     $M^7_-$

I     II     III

| N1 | $M$ | $M$ | |
| N2 | $M^1_+$ | $M$ | ← $M^2_-$ ; $M^3_+$ |
| N3 | $M^2_+$ | $M^2_+ + M^3_-$ | ← $M^4_+$ ; $M^5_-$ |
| N4 | $M^4_-$ | $M^4_- + M^5_+$ | |

FIG.3

2

L'invention concerne un procédé de classification mis en oeuvre dans un réseau de neurones en couches, comprenant des étapes d'apprentissage au cours desquelles au moins une couche est construite par addition de neurones successifs nécessaires pour opérer par dichotomies successives une classification d'exemples répartis par classes.

Elle concerne également un réseau de neurones mettant en oeuvre ce procédé.

Les réseaux de neurones trouvent leurs applications dans les problèmes de classification en particulier pour la reconnaissance de forme, de caractères, le traitement du signal de la parole, le traitement d'images, de compression de l'information...

Les réseaux de neurones sont constitués d'automates non-linéaires généralement connectés entre eux par des synapses auxquelles sont affectés des coefficients synaptiques. Ils permettent de traiter des problèmes qui le sont difficilement par les ordinateurs séquentiels classiques.

Les deux types de réseaux les plus répandus sont :
- les réseaux pleinement connectés dits de Hopfield
- les réseaux en couches : les neurones sont regroupés en couches successives, chaque neurone est connecté à tous les neurones de la couche suivante. Dans l'organisation la plus générale l'information passe de bornes d'entrée (passives) à une couche d'entrée (active) puis successivement à chaque couche cachée (active) puis à une couche de sortie (active). Dans l'organisation la plus simplifiée l'information passe de bornes d'entrée (passives) à une seule couche (active) de sortie.

Ces systèmes sont capables d'apprendre par l'exemple ou de s'auto-organiser. Les temps de calcul très longs sur ordinateur séquentiel peuvent se réduire considérablement en parallélisant les opérations qui comprennent des phases d'apprentissage et des phases de résolution.

Pour effectuer un traitement donné, les réseaux de neurones doivent au préalable apprendre à l'effectuer. Cette phase appelée apprentissage fait appel à des exemples. Pour de nombreux algorithmes, les résultats que l'on doit obtenir en sortie avec ces exemples sont généralement connus à l'avance. Dans un premier temps le réseau de neurones qui n'est pas encore adapté à la tâche prévue, va délivrer des résultats erronés. On détermine alors une erreur entre les résultats obtenus et ceux que l'on aurait dû obtenir et, à partir d'un critère d'adaptation, on modifie les coefficients synaptiques pour permettre au réseau de neurones d'apprendre l'exemple choisi. Cette étape est réitérée sur le lot d'exemples considérés comme nécessaires à un apprentissage satisfaisant du réseau de neurones.

Les algorithmes d'apprentissage se répartissent en deux classes :
- les apprentissages locaux, où la modification d'un coefficient synaptique $C_{ij}$ reliant un neurone j à un neurone i ne dépend que de l'information localisée sur les neurones i et j,
- les apprentissages non-locaux, où la modification dépend d'informations situées dans tout le réseau. Ce dernier apprentissage est par exemple celui de la rétropropagation de l'erreur dans des réseaux en couches.

Des informations sur divers types de réseaux de neurones peuvent par exemple être trouvées dans l'article de R.P. LIPPMANN, "An introduction to computing with neural nets" IEEE ASSP Magazine Avril 1987 p.4 à 22.

Dans ces réseaux de neurones l'organisation de la structure est fixe (en couches ou pleinement connectée) et les liaisons entre neurones sont fixées à l'avance.

L'apprentissage qui est alors effectué a pour objectif de chercher une structure optimale en opérant sur différentes architectures puis de faire un choix a posteriori sur la base des résultats obtenus.

Un algorithme qui permet de déterminer l'architecture au cours de l'apprentissage a été proposé par : M. MEZARD et J.P. NADAL dans "Learning in Feedforward Layered networks : the tiling algorithm" J. Phys. A : Math. Gen. 22 (1989) p.2191-2203.

Pour cela on initialise l'apprentissage en optimisant les coefficients synaptiques d'un premier neurone (neurone père) affecté à une première couche et si ce neurone ne suffit pas pour accomplir la tâche de classification on ajoute un neurone supplémentaire dans la couche en cours ou dans la couche suivante qui est ainsi initialisée. Cette approche permet d'apprendre l'architecture et les paramètres de réseaux en couches (Multilayer Perceptrons) en séparant les sorties en deux classes.

Mais une telle structure de réseau de neurones ne permet pas de traiter des problèmes de classification opérant sur des exemples répartis sur plusieurs classes.

Le problème posé consiste donc à pouvoir traiter de tels problèmes tout en maintenant la détermination de l'architecture lors de l'apprentissage.

La solution consiste en ce que pour créer au moins une couche à partir d'un groupe d'exemples répartis sur plus de deux classes, chaque neurone successif tend à distinguer ses données d'entrée selon deux sous-groupes de classes prédéterminés propres audit neurone selon une analyse en composantes principales de la distribution desdites données d'entrée soumises à l'apprentissage du neurone de la couche concernée.

Le procédé va donc mettre en oeuvre un neurone père puis des neurones successeurs qui ensemble vont permettre de séparer le groupe d'exemples répartis sur plusieurs classes en sous-groupes d'exemples formant chacun une classe unique. Pour opérer l'apprentissage chaque neurone va donc mettre en oeuvre plusieurs étapes successives :

A - Introduction du groupe inhomogène d'exemples,

B - Répartition des exemples du groupe inhomogène en deux sous-groupes de classes basée sur une analyse en composantes principales,

C - Apprentissage d'un neurone père en calculant ses coefficients synaptiques pour qu'il tende à distinguer le groupe d'exemples en deux sous-groupes d'exemples approchant le mieux possible la première répartition en deux sous-groupes de classes,

D - Test de l'homogénéité de chacun des deux sous-groupes d'exemples pour déterminer s'ils renferment ou non une seule classe d'exemples,

E - Parmi lesdits sous-groupes d'exemples sélection d'un seul sous-groupe inhomogène,

F - Répartition des exemples du sous-groupe inhomogène en deux sous-groupes de classes basée sur une analyse en composantes principales,

G - Apprentissage d'un neurone suivant en calculant ses coefficients synaptiques pour qu'il tende à distinguer le sous-groupe d'exemples inhomogène sélectionné en deux sous-groupes d'exemples approchant le mieux possible la répartition suivante en deux sous-groupes de classes,

H - Action dudit neurone suivant sur l'ensemble des sous-groupes inhomogènes d'exemples distingués par le neurone précédent pour générer de nouveaux sous-groupes d'exemples,

I - Test de l'homogénéité de chacun de ces nouveaux sous-groupes d'exemples générés,

J - Extraction des exemples appartenant à des sous-groupes inhomogènes d'exemples,

K - Poursuite à l'étape E sur les sous-groupes d'exemples inhomogènes restants jusqu'à l'obtention de sous-groupes homogènes formés de classes uniques.

Cette distinction des exemples en deux sous-groupes d'exemples opérée par un neurone tend à se conformer à une répartition des classes effectuée par une analyse en composantes principales de la distribution d'exemples en opérant la répartition en deux sous-groupes de classes en relation avec le centre de gravité de la distribution d'exemples.

L'analyse en composantes principales est une méthode statistique qui permet de décrire un ensemble de vecteurs à l'aide d'un vecteur moyen de d directions principales et des variances correspondantes. Cette méthode est décrite ci-après.

Pour effectuer l'apprentissage on calcule les coefficients synaptiques d'un neurone père pour séparer un groupe M d'exemples en vue de distinguer un sous-groupe de classes particulier P depuis le groupe d'exemples M. La distinction peut consister à isoler le sous-groupe P dans un sous-groupe $M_+^1$.

La distinction dans le groupe $M_+^1$ de la classe particulière P que l'on désire opérer à l'aide du neurone peut n'être obtenue qu'imparfaitement lorsque les classes d'exemples ne sont pas linéairement séparables. Ainsi des exemples ayant la même classe que la classe particulière P peuvent se trouver dans le sous-groupe complémentaire $M_-^1$ après distinction par le premier neurone.

Le groupe $M_+^1$ et le groupe complémentaire $M_-^1$ sont alors testés en homogénéité pour déterminer s'ils renferment une classe unique. Si l'un et l'autre de ces groupes sont homogènes, la distinction de ces sous-groupes est achevée. Si l'un ou l'autre de ces groupes est inhomogène, on sélectionne un sous-groupe inhomogène et on génère un neurone successeur qui sépare le groupe inhomogène en deux nouveaux groupes. Pour cela le procédé sépare préalablement les classes présentes dans le sous-groupe en deux sous-groupes de classes suivant une analyse en composantes principales, puis calcule des coefficients synaptiques pour ce neurone successeur qui opère cette distinction selon un critère de dichotomie suivant les deux sous-groupes de classes. Puis on fait agir le neurone successeur, avec ses coefficients synaptiques ainsi déterminés, sur l'ensemble des groupes inhomogènes générés par le neurone précédent (un ou deux groupes). Cette procédure de dichotomie des exemples et de génération de neurones successeurs est itérée sur les générations successives.

Lorsque toutes les classes sont ainsi distinguées, les phases d'apprentissage sont alors achevées et le réseau de neurones peut être utilisé en mode d'exploitation pour opérer des classifications.

Après distinction des classes en deux sous-groupes, l'apprentissage de chaque neurone opérant une distinction sur deux sous-groupes peut présenter plusieurs variantes. Préférentiellement on met en oeuvre l'algorithme Pocket utilisé par M. MEZARD et J.P. NADAL et décrit par S. GALLANT dans "Optimal linear discriminants" IEEE Proc. 8th. Conf. on Pattern Recognition Paris (1986). Cet algorithme Pocket peut être utilisé pour opérer la séparation effectuée par chaque neurone.

Il est aussi possible pour chaque neurone d'utiliser un critère d'apprentissage des "Perceptrons" qui réactualisent les coefficients synaptiques à partir d'erreurs qui, pour un exemple quelconque, caractérisent l'écart entre un résultat obtenu en sortie du réseau de neurones et le résultat attendu. Ces critères d'apprentissage sont connus de l'homme du métier.

Le calcul des coefficients synaptiques d'un neurone quelconque est destiné à faire que le neurone concerné distingue soit le groupe d'exemples d'entrée soumis à l'action des neurones de la couche d'entrée, soit les groupes inhomogènes sélectionnés soumis respectivement à l'action des neurones des couches suivantes chaque fois selon deux groupes de classes prédéterminés.

Pour effectuer l'apprentissage d'un neurone quelconque le calcul de ses coefficients synaptiques met en oeuvre soit l'algorithme "Pocket" soit une règle d'apprentissage de type "Perceptron" soit une règle d'apprentissage de type Hebb (voir R.P. LIPPMANN déjà cité et R. MEIR et E. DOMANY dans "Iterated Learning in a layered Feed-Forward Neural Network Phys. Rev. A, vol.37, n° 7, 1988, p.2660).

L'invention concerne également un réseau de neurones mettant en oeuvre le procédé. Le réseau de neurones est d'abord construit puis utilisé pour opérer les tâches de classification apprises. Les neurones formant la première couche joue un rôle de séparateur dans l'espace des données d'entrée. Ils délivrent donc en sortie chacun un état binaire. L'ensemble de ces états binaires constituent les données d'entrée de la couche suivante. Cet ensemble d'états binaires peut être décodé à l'aide de couches successives formant le réseau de neurones. Il peut aussi être décodé à l'aide d'une mémoire qui stocke les classes d'exemples en fonction des états binaires des neurones de la première couche. En mode d'exploitation cette mémoire est adressée par ces états binaires puis lue pour délivrer les classifications effectuées.

L'invention sera mieux comprise à l'aide des figures suivantes données à titre d'exemples non limitatifs qui représentent :

Figure 1 : une représentation dans l'espace des entrées du mode d'action des séparateurs dans une base d'exemples répartis sur K classes.

Figure 2 : un organigramme qui indique le mécanisme de séparation des classes et les sous-groupes d'exemples concernés pour l'apprentissage du réseau de neurones en couches.

Figure 3 : une représentation de la séparation des exemples.

Figures 4A, 4B : une représentation des composantes principales d'une distribution et un exemple de répartition de classes.

Figure 5 : un exemple d'algorithme constitué par l'algorithme Pocket permettant d'opérer la séparation entre deux sous-groupes de classes.

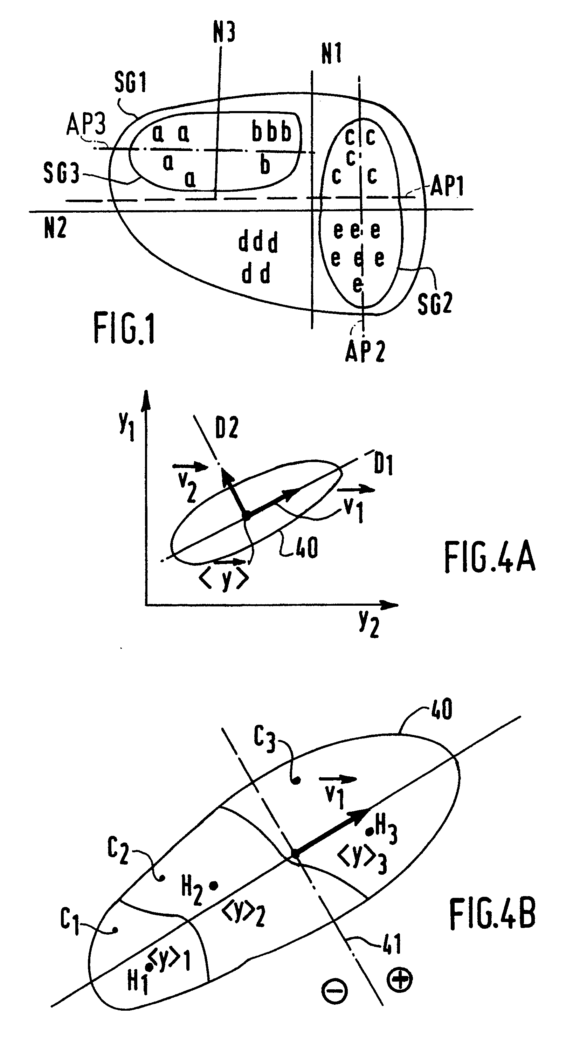

La figure 1 représente un cas théorique d'un espace à 2 dimensions pour lequel vingt-cinq exemples sont positionnés dans cet espace selon leurs valeurs respectives se rapportant aux paramètres de cet espace. Les exemples sont répartis sur cinq classes a, b, c, d, e, un exemple étant indiqué par une lettre correspondant à sa classe. Les exemples sont répartis dans les sous-groupes successifs SG1, SG2 et SG3 dont les axes principaux de la distribution sont respectivement AP1, AP2 et AP3. Chaque sous-groupe subit une dichotomie opérée par un neurone qui le sépare en deux parties. Successivement les sous-groupes SG1, SG2, SG3 sont ainsi traités respectivement par les neurones N1, N2, N3.

La détermination des axes principaux de la distribution des exemples à l'aide d'une analyse en composantes principales est détaillée ci-après. Les axes principaux sont les directions qui déterminent les composantes principales de la distribution.

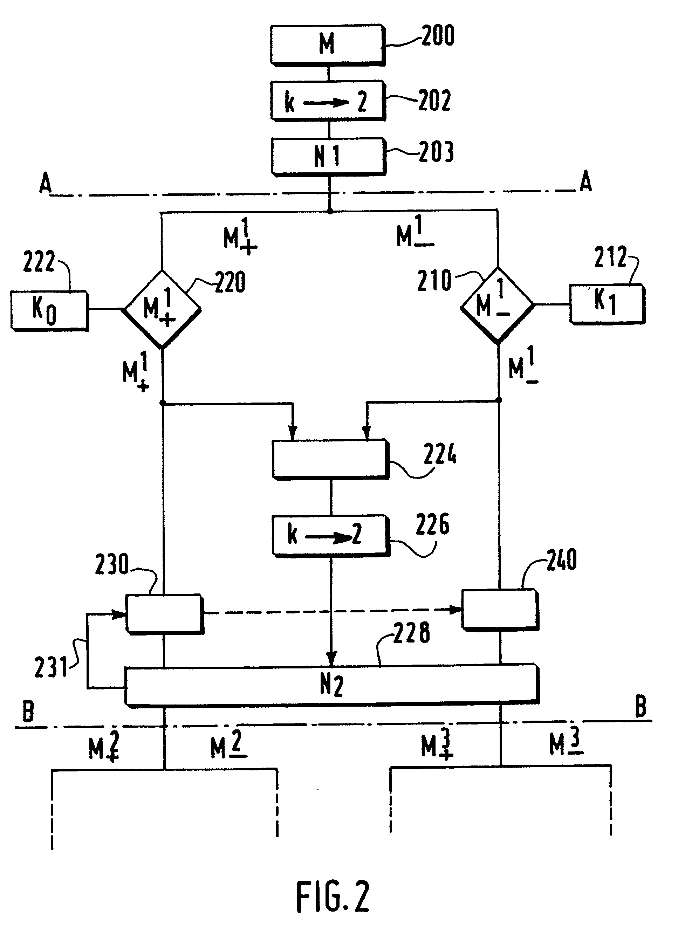

La figure 2 représente un organigramme relatif à un réseau en couches où apparaissent différentes étapes du procédé. Celui-ci opère à partir d'une sélection d'un groupe M d'exemples (étape 200) choisis pour réaliser un apprentissage du réseau de neurones et l'adapter au traitement d'une tâche définie. Par définition ce groupe M d'exemples est inhomogène (plus d'une classe). L'apprentissage doit être compris ici dans un sens large car il consiste non seulement à déterminer les coefficients synaptiques requis (apprendre au réseau de neurones) mais simultanément à déterminer le nombre de neurones nécessaires pour accomplir cette tâche. Il s'agit donc également de déterminer la taille que doit avoir le réseau de neurones.

Le groupe M d'exemples est formé par exemple de k classes différentes. L'étape 202 consiste à répartir préalablement les k classes en deux sous-groupes de classes $G_+^1$ et $G_-^1$ afin de ramener le problème de classification de k classes à un problème de classification de deux sous-groupes de classes $G_+^1$ et $G_-^1$. Au cours de l'étape 203 le procédé détermine les coefficients synaptiques d'un neurone père qui opère sur l'ensemble du groupe d'exemples M. Ces coefficients synaptiques sont déterminés pour que le réseau de neurones tende à opérer la distinction, à partir du groupe d'exemples M, de deux sous-groupes $M_+^1$ et $M_-^1$ renfermant respectivement au mieux les deux sous-groupes de classes préalablement répartis $G_+^1$, $G_-^1$. Le mécanisme d'apprentissage qui permet de déterminer les coefficients synaptiques est effectué préférentiellement par l'algorithme Pocket décrit ci-après. Dans ces conditions l'apprentissage s'avère être optimal à la fois pour la durée d'exécution et pour le matériel nécessaire à le mettre en oeuvre. La sortie du réseau de neurones s'analyse sous forme de l'affectation correcte ou non de chaque classe au sous-groupe prévu. Pour fixer les idées on peut par exemple chercher à isoler un sous-groupe de classe $G_+^1$ à partir du groupe d'exemples M. Le sous-groupe de classes $G_+^1$ est alors formé par le groupe d'exemples M dans lequel on a extrait le sous-groupe de classes $G_+^1$. L'apprentissage du neurone père va ainsi tendre à faire correspondre $M_+^1$ avec $G_+^1$ et $M_-^1$ avec $G_-^1$.

Le sous-groupe de classes $G_+^1$ peut être homogène ou inhomogène. Les classes n'étant pas a priori linéairement séparables, le sous-groupe $M_-^1$ ainsi séparé peut comprendre lui aussi des éléments du sous-groupe de classe $G_+^1$.

Les exemples générant les sous-groupes d'exemples $M_+^1$ et $M_-^1$ sont tout d'abord traités séparément. On examine l'homogénéité de $M_+^1$ et de $M_-^1$, étapes 220, 210.

En effet le neurone père a pour tâche de distinguer un sous-groupe de classes prédéfini. Si le groupe d'exemples $M_+^1$ (respectivement $M_-^1$) est homogène, c'est-à-dire s'il ne contient que des exemples d'une même classe, ces exemples sont ainsi distingués, étape 222 (respectivement étape 212) (classes $K_0$, $K_1$).

Si le sous-groupe d'exemples $M_+^1$ (respectivement $M_-^1$) est inhomogène, c'est-à-dire s'il contient des exemples de classes diffférentes, il faut continuer la distinction.

Pour cela on sélectionne (étape 224) un sous-groupe d'exemples inhomogène soit $M_+^1$ soit $M_-^1$. Ce choix peut être fait par exemple en prenant le sous-groupe le plus nombreux ou le sous-groupe renfermant le moins de classes ou tout autre critère.

Le sous-groupe $M_+^1$ ou $M_-^1$ ainsi sélectionné est soumis à l'action d'une répartition de classes qui consiste, comme pour l'étape 202, à répartir les k classes du sous-groupe sélectionné en deux sous-groupes de classes seulement (étape 226). Ceci ramène le problème de classification à k classes à un problème de classification à deux classes. L'apprentissage du neurone $N_2$ (étape 228) consiste à effectuer une première distinction du sous-groupe d'exemples sélectionné en deux sous-groupes et pour cela consiste à tendre à faire correspondre les deux sous-groupes d'exemples nouveaux aux deux sous-groupes de classes prédéterminées. Les coefficients synaptiques du neurone $N_2$ sont ainsi déterminés. Ils restent alors inchangés et le neurone $N_2$ opère une seconde séparation sur la totalité des sous-groupes d'exemples $M_+^1$ et $M_-^1$ générés par le neurone précédent. Une commande 231 est pour cela émise qui valide le traitement de $M_+^1$ (étape 230) et de $M_-^1$ (étape 240) par le neurone $N_2$.

A l'issue de ces deux dernières étapes le neurone $N_2$ a réparti respectivement les exemples des sous-groupes $M_+^1$ et $M_-^1$ en deux nouveaux sous-groupes d'exemples $M_+^2$ /$M_-^2$ et $M_+^3$ /$M_-^3$.

L'ensemble de ces quatre sous-groupes est alors traité par un neurone successeur $N_3$ (non représenté) selon le même mécanisme. La suite d'étapes située entre les lignes discontinues A-A et B-B (fig. 2) est reprise à l'identique en opérant sur quatre sous-groupes au lieu de deux sous-groupes.

L'étape de construction de la couche courante est achevée lorsque tous les exemples du groupe M ont ainsi été traités et que chaque sous-groupe d'exemples isolé ne contient que des exemples appartenant à une même classe. Le procédé peut s'en tenir là, où éventuellement construire une couche supplémentaire si nécessaire.

A l'issue de la construction de la première couche, la distinction entre des mots de données multiclasses peut être effectuée. Mais les configurations des états de sortie peuvent alors être réparties sur un nombre de sorties qui peut être trop élevé. Il peut alors être souhaitable d'opérer un transcodage pour réduire le nombre de sortie. Pour cela on construit une couche suivante en utilisant le même procédé de construction que celui utilisé pour construire la première couche de neurones active. On utilise pour cela les sorties de cette première couche de neurones comme entrées pour une seconde couche. On peut réitérer le processus avec d'autres couches suivantes. En sortie de la dernière couche ainsi construite on obtient des configurations d'états de sortie réparties sur un nombre réduit de sorties. Ces configurations permettent de distinguer les différentes classes des mots de données présentés à l'entrée.

Le nombre de neurones et leurs coefficients synaptiques sont ainsi déterminés par le procédé lui-même et l'opération d'apprentissage est achevée pour ce groupe d'exemples. Le réseau de neurones peut alors être exploité pour opérer des tâches de classifications.

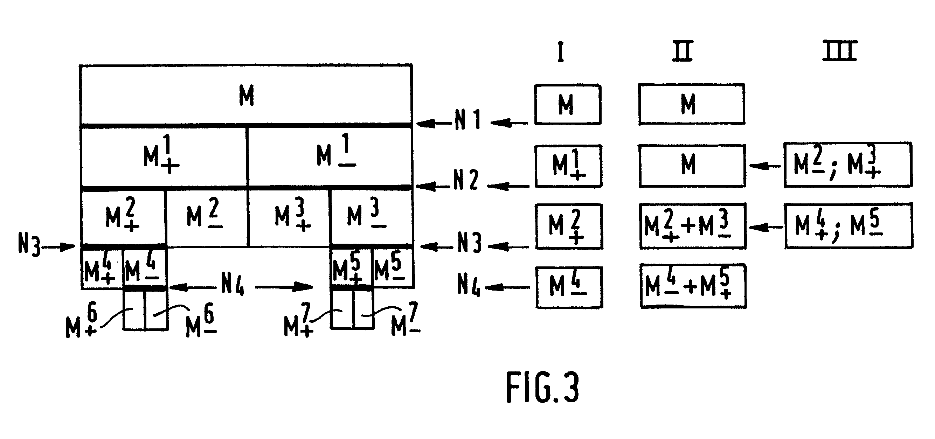

La figure 3 est une autre représentation des étapes de séparation opérées par le procédé selon l'invention. Sur le groupe inhomogène M d'exemples le neurone père $N_1$ (représenté par un trait gras) effectue la séparation selon les sous-groupes d'exemples $M_+^1$ et $M_-^1$.

On suppose sur cette représentation que les deux sous-groupes d'exemples $M_+^1$ et $M_-^1$ sont inhomogènes. L'un des sous-groupes est sélectionné par exemple $M_+^1$ pour opérer l'apprentissage par un neurone successeur $N_2$ en calculant ses coefficients synaptiques. Lorsque cet apprentissage est terminé le neurone $N_2$ conserve ces coefficients synaptiques et opère la répartition sur l'ensemble $M_+^1$ et $M_-^1$ qu'il sépare respectivement en $M_+^2$ /$M_-^2$ et $M_+^3$ /$M_-^3$. Supposons que $M_-^2$ et $M_+^3$ soient homogènes le procédé se poursuit avec les deux sous-groupes inhomogènes restants soit $M_+^2$ et $M_-^3$. Le sous-groupe $M_+^2$ est par exemple sélectionné pour calculer les coefficients synaptiques d'un neurone

successeur $N_3$. Ensuite le neurone $N_3$ répartit les sous-groupes $M_+^2$ et $M_-^3$ respectivement selon les sous-groupes $M_+^4$ /$M_-^4$ et $M_+^5$ /$M_-^5$. Si par exemple seulement $M_-^4$ et $M_+^5$ sont inhomogènes un neurone successeur $N_4$ opère comme préalablement pour séparer les sous-groupes $M_+^6$ /$M_-^6$ et $M_+^7$ /$M_-^7$ supposés homogènes. L'apprentissage du réseau de neurone pour cette tâche de classification est alors achevée et il peut être utilisé en mode d'exploitation pour opérer ce type de tâche sur d'autres exemples.

La partie droite de la figure 3 indique en colonne I le groupe d'exemples utilisé par le neurone placé sur la même ligne pour le calcul des coefficients synaptiques de ce neurone.

La colonne II indique le groupe d'exemples sur lequel le neurone placé sur la même ligne effectue ensuite la distinction des sous-groupes d'exemples.

La colonne III indique pour chacun desdits neurones les sous-groupes d'exemples homogènes qui sont alors extraits avant l'action du neurone successeur.

Selon l'invention la répartition vers laquelle doit tendre le neurone consiste à exploiter une analyse en composantes principales de la distribution d'exemples. L'analyse en composantes principales est une méthode statistique qui permet de décrire un ensemble de N vecteurs $\vec{y}^\mu$

(points dans un espace à d dimensions) à l'aide d'un vecteur moyen

$$\vec{\langle y \rangle} = \frac{1}{N} \sum_\mu y^\mu$$

de d directions principales et les d variances correspondantes $\sigma^2$. La méthode détaillée dans "Eléments d'Analyse de Données" de E. DIDAY, J. LEMAIRE, J. POUGET, E. TESTU, Editeur Dunod (1982) p.167.

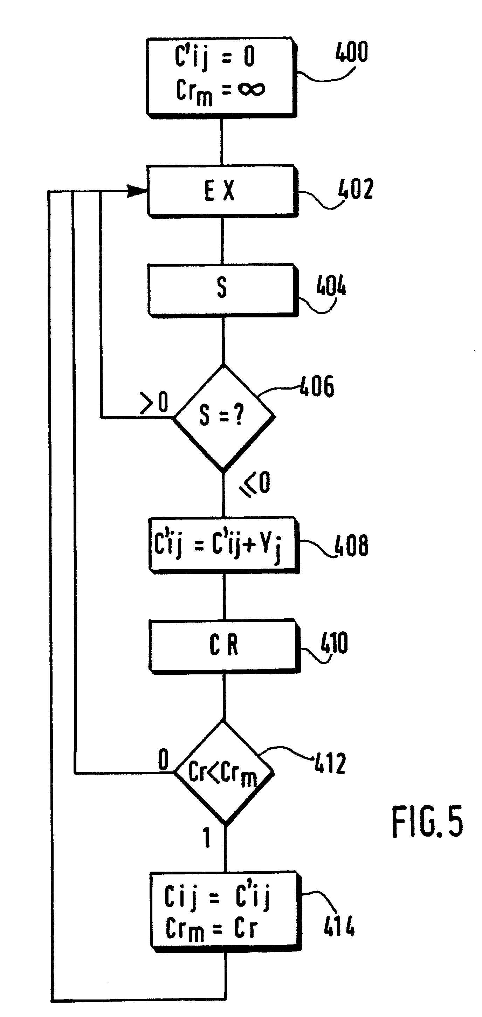

Le cas simple de la figure 4A représente une distribution 40 dans un espace à deux dimensions avec un rapport des écarts-type $\sigma1/\sigma2$ sensiblement égal à 3. Pour cette distribution on définit une moyenne $< \vec{y} >$ et des composantes principales $\vec{V}_1$, $\vec{V}_2$ selon des directions propres $D_1$, $D_2$. Si on classe les composantes principales par variances décroissantes, la première direction propre indique la direction selon laquelle la norme de ( $\vec{y}^\mu$ - $< \vec{y} >$) varie le plus avec l'exemple $\mu$. Lorsqu' on dispose d'un ensemble d'exemples $\vec{y}^\mu$ attribués aux classes $C_1$, $C_2$, ..., $C_k$, auxquels on veut appliquer un séparateur linéaire (neurone) pour progresser dans la classification à k classes, il est avantageux de séparer les k classes en deux groupes disjoints $G_+$/$G_-$ de la façon suivante :

i) on calcule la moyenne $< \vec{y} >$ et la première composante principale $\vec{V}_1$ de l'ensemble des exemples $\vec{y}^\mu$, en effectuant par exemple une analyse en composantes principales complète par calcul et diagonalisation de la matrice de covariance suivi du choix de la composante de variance maximum,

ii) on calcule les centres de gravité correspondant à chaque classe C :

$$\vec{\langle y \rangle}_C = \frac{1}{Nc} \sum_C y^\mu$$

où $\sum_C$ indique une sommation sur les exemples dont la classe est C, Nc le nombre d'exemples de la classe C,

iii) on regroupe les classes dont le centre de gravité vérifie :

$$( \vec{\langle y \rangle}_C - \vec{\langle y \rangle} ) . \vec{V}_1 > 0$$

dans $G_+$, les autres dans $G_-$.

La méthode d'analyse en composantes principales est illustrée par la figure 4B pour une distribution à deux dimensions et trois classes. La distribution 40 comprend les classes $C_1$, $C_2$, $C_3$ ayant chacune une valeur moyenne $<y>_1$, $<y>_2$, $<y>_3$ et un centre de gravité $H_1$, $H_2$, $H_3$. Selon i) le calcul de la moyenne et du premier vecteur principal détermine $<y>$ et $\vec{V}_1$. Selon ii) le calcul des centres de gravité associés aux classes détermine $H_1$, $H_2$, $H_3$. Le regroupement des classes selon iii) permet de répartir les trois classes en deux sous-groupes de classes à l'aide du séparateur 41.

Dans ce cas la répartition des exemples en deux sous-groupes de classes effectue une répartition par rapport à l'axe passant par le centre de gravité de la distribution d'exemples perpendiculairement à une direction principale, ledit centre étant déterminé lors de l'analyse en composantes principales. L'avantage essentiel de cette méthode par rapport à d'autres choix (sélection d'une classe par exemple) est que le séparateur linéaire sera plus équilibré c'est-à-dire qu'il séparera les exemples en deux sous-ensembles de population moins différentes.

Les apprentissages effectués par les neurones afin de déterminer leurs coefficients synaptiques pour approcher au mieux les sous-groupes de classes désirés sont préférentiellement effectués selon l'algorithme Pocket utilisé par M. MEZARD et J.P. NADAL dans "Learning in Feedforward Layered networks : the tiling algorithm" J. Phys. A : Math. Gen. 22 (1989) p.2191-2203 et décrit par S. GALLANT "Optimal Linear Discriminants" IEEE proc. 8th. Conf. on Pattern Recognition, Paris (1986).

Pour cela pour chaque exemple choisi au hasard on calcule le potentiel de sorties d'un neurone. Si ce potentiel satisfait le critère de stabilité $S \geq 0$ on choisit un autre exemple. Si ce potentiel ne satisfait pas le critère de stabilité ($S < 0$) on calcule des nouveaux coefficients synaptiques qui servent à la mise à jour des anciens coefficients synaptiques uniquement s'ils satisfont un critère d'erreurs minimal. Tous les exemples sont ainsi utilisés pour déterminer les coefficients synaptiques du neurone concerné, l'algorithme 'Pocket' convergeant vers des coefficients synaptiques optimaux pour opérer la dichotomie de la classe inhomogène.

Cet algorithme (tiling) a été conçu pour construire un réseau de neurones multicouches en ajoutant des neurones jusqu'à ce que le code représenté ($+/-$ ;1/0) par les unités de la couche en cours soit fidèle, c'est-à-dire que deux exemples de classes différentes n'aient pas le même code sur l'ensemble de la couche concernée. Chaque couche est ainsi construite à partir des exemples de la couche précédente.

La figure 5 représente l'organigramme de l'algorithme Pocket qui opère la séparation d'un groupe d'exemples en deux groupes.

Pour un neurone donné on initialise ses coefficients synaptiques $C_{ij}$; à zéro et on initialise un critère d'erreurs maximum $CR_m$ à une valeur très élevée (étape 400). On tire aléatoirement un exemple EX (étape 402) pour lequel on détermine (étape 404) une valeur de stabilité S telle que :

$$S = \sum_{j=0}^{N} C_{ij} \cdot Y_j^{\mu}$$

où i est l'indice du neurone en cours d'analyse,

j est l'indice des neurones ou des entrées qui lui sont connectés

$Y_j^{\mu}$ est la composante j de l'exemple $\mu$ présenté à l'entrée du neurone i.

Cette stabilité S est testée (étape 406). Si elle est positive, la stabilité est suffisante et on choisit un autre exemple.

Si cette stabilité S est négative ou nulle des coefficients synaptiques $C'_{ij}$ sont déterminés tel que :
$C'_{ij}$ (nouveau) = $C'_{ij}$ (ancien) + $Y_j$ (étape 408).

Chaque nouveau coefficient synaptique $C'_{ij}$ ainsi déterminé doit satisfaire un critère d'erreurs CR (étape 410) qui détermine par exemple le nombre d'exemples pour lesquels la stabilité est du mauvais signe. Si ce critère CR est inférieur à une valeur maximale $CR_m$ du critère (étape 412), les coefficients synaptiques $C'_{ij}$ déterminés servent à mettre à jour (étape 414) les coefficients synaptiques $C_{ij}$ préalablement mémorisés.

De même la valeur maximale $CR_m$ est mise à jour. Tous les exemples sont ainsi successivement utilisés pour calculer puis éventuellement mettre à jour les coefficients synaptiques de ce neurone i. A l'issue de cet apprentissage, la séparation opérée par ce neurone i est testée en déterminant pour un exemple d'un groupe donné le résultat obtenu (séparation en deux groupes de classes : $+/-$ ;1/0). Si la séparation ne délivre pas des groupes de classes homogènes un autre neurone est ajouté dans la couche et l'algorithme Pocket est mis en oeuvre à nouveau de la même manière.

L'invention concerne également un réseau de neurones muni de moyens mettant en oeuvre le procédé. Le réseau comprend une unité de calcul qui détermine les états de sortie $V_i$ des neurones à partir des potentiels d'entrée $V_j$ selon :

$$V_i = \sum C_{ij} \ V_j$$

où $C_{ij}$ sont les coefficients synaptiques qui relient le neurone i aux entrées j (ou neurone j). Pour cela chaque composante d'un vecteur d'entrée arrive sur une borne d'entrée. Les vecteurs d'entrée $V_j$ arrivent successivement sur les bornes d'entrée selon le procédé décrit. Un premier neurone (neurone père) est créé. Il reçoit toutes les composantes des vecteurs d'entrée présentes sur les bornes d'entrée. Si le premier neurone n'est pas suffisant pour opérer la séparation requise des classes, on génère un second neurone qui reçoit également toutes les composantes présentes sur les bornes d'entrée. La génération du réseau de neurones s'opère de cette façon pour la totalité des neurones nécessaires. L'unité de calcul opère selon les mécanismes connus de l'homme du métier décrits par exemple dans l'article de R.P. LIPPMANN déjà cité. Un calculateur hôte gère l'ensemble des opérations.

Le réseau de neurones en couches peut être formé de couches successives ayant des neurones dont l'apprentissage est opéré selon le procédé décrit. Il est également possible que le réseau de neurones soit formé d'une seule couche, obtenue selon le procédé décrit, dont les neurones agissent comme séparateurs dans l'espace des entrées. Les états de sorties des neurones de cette couche peuvent alors être traités directement par une mémoire qui stocke les classes d'exemples en fonction des états binaires des neurones de ladite couche.

## Revendications

1. Procédé de classification mis en oeuvre dans un réseau de neurones en couches, comprenant des étapes d'apprentissage au cours desquelles au moins une couche est construite par addition de neurones successifs nécessaires pour opérer par dichotomies successives une classification d'exemples répartis par classes caractérisé en ce que pour créer au moins une couche à partir d'un groupe d'exemples répartis sur plus de deux classes, chaque neurone successif tend à distinguer ses données d'entrée selon deux sous-groupes de classes prédéterminés propres audit neurone selon une analyse en composantes principales de la distribution desdites données d'entrée soumises à l'apprentissage du neurone de la couche concernée.

2. Procédé selon la revendication 1 caractérisé en ce que pour distinguer le groupe inhomogène d'exemples, l'apprentissage comprend les étapes suivantes :

A - Introduction du groupe inhomogène d'exemples,

B - Répartition des exemples du groupe inhomogène en deux sous-groupes de classes basée sur une analyse en composantes principales,

C - Apprentissage d'un neurone père en calculant ses coefficients synaptiques pour qu'il tende à distinguer le groupe d'exemples en deux sous-groupes d'exemples approchant le mieux possible la première répartition en deux sous-groupes de classes,

D - Test de l'homogénéité de chacun des deux sous-groupes d'exemples pour déterminer s'ils renferment ou non une seule classe d'exemples,

E - Parmi lesdits sous-groupes d'exemples sélection d'un seul sous-groupe inhomogène,

F - Répartition des exemples du sous-groupe inhomogène en deux sous-groupes de classes basée sur une analyse en composantes principales,

G - Apprentissage d'un neurone suivant en calculant ses coefficients synaptiques pour qu'il tende à distinguer le sous-groupe d'exemples inhomogène sélectionné en deux sous-groupes d'exemples approchant le mieux possible la répartition suivante en deux sous-groupes de classes,

H - Action dudit neurone suivant sur l'ensemble des sous-groupes inhomogènes d'exemples distingués par le neurone précédent pour générer de nouveaux sous-groupes d'exemples,

I - Test de l'homogénéité de chacun de ces nouveaux sous-groupes d'exemples générés,

J - Extraction des exemples appartenant à des sous-groupes inhomogènes d'exemples,

K - Poursuite à l'étape E sur les sous-groupes d'exemples inhomogènes restants jusqu'à l'obtention de sous-groupes homogènes formés de classes uniques.

3. Procédé selon la revendication 2 caractérisé en ce que le calcul des coefficients synaptiques met en oeuvre soit l'algorithme "Pocket", soit une règle d'apprentissage du type "Perceptron", soit une règle d'apprentissage de type "Hebb".

4. Réseau de neurones muni de moyens d'apprentissage caractérisé en ce qu'il comprend des moyens pour mettre en oeuvre le procédé selon une des revendications 1 à 3.

5. Réseau de neurones selon la revendication 4 caractérisé en ce qu'il comprend une mémoire qui stocke les classes d'exemples en fonction des états binaires des neurones de la première couche.

FIG.1

FIG.4A

FIG.4B

FIG.2

FIG.3

$$C'ij = 0$$
$$Cr_m = \infty$$
400

EX — 402

S — 404

$$S = ?$$ — 406
$> 0$
$\leqslant 0$

$$C'ij = C'ij + V_j$$ — 408

CR — 410

$$Cr < Cr_m$$ — 412
0
1

$$Cij = C'ij$$
$$Cr_m = Cr$$
414

FIG.5

Office européen
des brevets

**RAPPORT DE RECHERCHE
EUROPEENNE**

Numéro de la demande

**EP 91 20 0248**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | IEEE INTERNATIONAL CONFERENCE ON NEURAL NETWORKS, San Diego, CA, 24-27 juillet 1988, pages I-247 - I-254; C. KOUTSOUGERAS et al.: "Training of a neural network for pattern classification based on an entropy measure" <br> * En entier * | 1,2 | G 06 F 15/80 |
| A | NEURAL NETWORKS, vol. 2, no. 6, 1989, pages 459-473; T.D. SANGER: "Optimal unsupervised learning in a single-layer linear feedforward neural network" <br> * Page 463, column 1, lines 41-51, column 2; pages 464-465; page 466, column 1, lines 1-40 * | 1-3 | |
| D,A | J. PHYS. A: MATH. GEN., vol. 22, 1989, pages 2191-2203; M. MEZARD et al.: "Learning in feedforward layered networks: the tiling algorithm" <br> * Pages 2191-2195; page 2196, lines 1-32; page 2201, lines 31-43; page 2202, lines 1-26 * | 1-3 | |
| D,A | IEEE PROCEEDINGS 8TH CONFERENCE ON PATTERN RECOGNITION, Paris, 27-31 octobre 1986, pages 849-852; S.I. GALLANT: "Optimal linear discriminants" <br> * En entier * | 3 | **DOMAINES TECHNIQUES RECHERCHES (Int. Cl.5)** <br><br> G 06 F 15/80 |
| A | PROCEEDINGS 1988 IEEE INTERNATIONAL CONFERENCE ON SYSTEMS, MAN, AND CYBERNETICS, Beijing et Shenyang, 8-12 août 1988, vol. 1, pages 46-49; S. BANDYOPADHYAY et al.: "Searching for conceptual connectivity among a set of concepts" <br> * Page 48, column 2, lines 35-55; page 49, column 1, lines 1-15; figure 2 * | 4 | |

−/−

Le présent rapport de recherche a été établi pour toutes les revendications

| Lieu de la recherche | Date d'achèvement de la recherche | Examinateur |
|---|---|---|
| La Haye | 16 avril 91 | JONASSON J.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
 
& : membre de la même famille, document correspondant

**Office européen
des brevets**

# RAPPORT DE RECHERCHE
# EUROPEENNE

Numéro de la demande

**EP 91 20 0248**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| P,X | NETWORK - COMPUTATION IN NEURAL SYSTEMS, vol. 1, no. 4, octobre 1990, pages 423-438; J.A. SIRAT et al.: "Neural trees: a new tool for classification" * En entier * | 1-5 | |

_ _ _ _ _

**DOMAINES TECHNIQUES
RECHERCHES (Int. Cl.5)**

Le présent rapport de recherche a été établi pour toutes les revendications

| Lieu de la recherche | Date d'achèvement de la recherche | Examinateur |
|---|---|---|
| La Haye | 16 avril 91 | JONASSON J.T. |

**CATEGORIE DES DOCUMENTS CITES**
X : particulièrement pertinent à lui seul
Y : particulièrement pertinent en combinaison avec un
   autre document de la même catégorie
A : arrière-plan technologique
O : divulgation non-écrite
P : document intercalaire
T : théorie ou principe à la base de l'invention

E : document de brevet antérieur, mais publié à la
   date de dépôt ou après cette date
D : cité dans la demande
L : cité pour d'autres raisons
\.......................................................................................
& : membre de la même famille, document
   correspondant